# EUROPEAN PATENT SPECIFICATION

(11) **EP 3 957 269 B1**
(45) Date of publication and mention of the grant of the patent: **29.11.2023**
(21) Application number: 21202151.3
(22) Date of filing: 10.10.2017
(51) Int. Cl.: A61C 13/00, A61C 13/10, A61C 13/36, A61C 9/00

(54) **COMMON PLACEMENT SUPPORT FOR ARTIFICIAL TEETH**
ABSTÜTZUNG FÜR GEMEINSAME PLATZIERUNG FÜR KÜNSTLICHE ZÄHNE
SUPPORT DE POSITIONNEMENT COMMUN POUR DENTS ARTIFICIELLES

(30) Priority: 10.10.2016 DK PA201670792
(43) Date of publication of application: 23.02.2022
(62) Divisional of application: 17781476.1
(73) Proprietor: 3Shape A/S, 1060 Copenhagen K (DK)
(72) Inventor: FISKER, Rune, 1060 Copenhagen K (DK)
(74) Representative: Guardian IP Consulting I/S

(56) References cited:
- WO-A1-2016/083296
- US-A- 2 768 440
- US-A1- 2011 111 366

## Description

### Field of the invention

This invention generally relates to common placement support for ensuring correct placement of artificial teeth in a denture base. In particularly, the invention relates to common placement supports provided during 3D printing for ensuring placement of artificial teeth in a denture base.

### Background of the invention

A method according to the preamble of claim 1 is known from WO 2016/083296 A1.

When digitally designing and manufacturing dentures it is important that the dental setup of the digital design is transferred to the final manufactured model. In particular when the denture is formed of a denture base (mainly representing the gingiva) and several artificial teeth it may be difficult to place the artificial teeth in the exact position as in the design and desired to obtain the desired occlusion, functionality and/or esthetics for the patient.

In order to solve this problems different solutions have been proposed, see for example US 2016/0256247 A1, which proposes the use of a dental transfer template and EP 1 444 965 A1, which proposes the use of positioning aids on the prosthesis base.

However, in some situations the manufacturing method used to manufacture the artificial teeth may also provide for alternative and/or further means for improve the positioning of the artificial teeth in the denture base as will be disclosed herein.

### Summary

In one aspect not forming part of the claimed invention there is disclosed a method for manufacturing a denture comprising a denture base and at least two artificial teeth arranged in the denture base, wherein the method comprises the steps of:
- obtaining the denture base,
- manufacturing the at least two artificial teeth with a common placement support connected to the at least two artificial teeth for keeping the at least two artificial teeth in a desired relative arrangement and where the common placement support and the at least two artificial teeth are manufactured as one unit,
- arranging the at least two artificial teeth on the denture base with the common placement support connected to the at least artificial teeth, and
- attaching the at least two artificial teeth on the denture base.

By manufacturing the at least two artificial teeth with a common placement support connected thereto it is ensured that the desired relative arrangement is maintained during handling of the two artificial teeth.

Accordingly, this ensures that the desired relative arrangement is maintained when the at least two artificial teeth are placed in the denture base and thus the desired esthetics and functionality of the final denture is obtained.

The denture design can be obtained in many different ways. However, by using digital design software / computer aided design (CAD) software the process can be facilitated. For example, an existing denture can be scanned using a desktop scanner and based on this scan a new digital denture design can be provided, either by using the old shape or basing a new design on the old shape. In another embodiment the oral cavity of the patient is scanned using an intra-oral scanner and the denture design can be designed to fit into the scanned oral cavity. The user can use many different digital design tools to perfect the digital denture design.

The digital denture is also segmented, i.e. separated, into the digital denture base and the digital artificial teeth in order to manufacture these parts separately.

Based on the digital denture design the denture base and the artificial teeth are manufactured separately. This is done since the denture base should be manufactured in a material that resembles the gum surface and the teeth should be manufactured in a material that resembles the teeth.

The current disclosure seeks to alleviate issues with placing the artificial teeth in the denture base when these parts are manufactured separately.

To further facility manufacturing the common placement support and the at least two artificial teeth are manufactured as one unit, for example by producing the parts in one production step using the same material.

In one example the method further comprises the step of removing the common placement support which is advantageous in case the common placement support has been placed in an area that normally visible when the patient wears the final denture.

Manufacturing can for example be done by a subtractive manufacturing method, such as milling, or by an additive manufacturing method, such as 3D printing. This manufacturing methods are both able to provide the common placement support and the at least two artificial teeth in one production step as discussed above.

One particular advantage when using additive manufacturing, such as 3D printing, is that the support sprues created during production can be used as the common placement support if the manufacturing is planned correctly.

In one example the common placement support is connected to the occlusal surfaces of the at least two artificial teeth. This ensures that the artificial teeth can be placed without obstruction.

In an alternative example the common placement support is connected to the lingual surface of the artificial teeth. This can be advantageous since the lingual surface are facing inwards towards the oral cavity and thus do not affect the visual esthetics of the final denture or the occlusion and accordingly facilitates the removal of the common placement support.

According to the invention there is disclosed a computer-implemented method for digitally planning the manufacturing of at least two digital artificial teeth provided in a digitally designed denture, as defined in claim 1, a system as defined in claim 4 for performing this method and a computer program as defined in claim 8 adapted to run on this system.

By maintaining the desired relative arrangement of the artificial teeth during planning of the manufacturing it is possible to avoid individual post-manufacturing handling of the respective artificial teeth and thereby improve correct positioning of the artificial teeth in the denture base.

As discussed above the digital designed denture can be obtained in different ways, e.g. based on a scan of a previous denture or designed from the ground up based on an intra oral scan of the patients oral cavity.

According to the invention the digital common placement support representing the common placement support and the at least two digital artificial teeth are digitally designed as one unit.

In particular with respect to computerized manufacturing processes (CAM) where the digital common placement support and the at least two digital artificial teeth are prepared to be manufactured by a subtractive manufacturing method, such as milling, or by an additive manufacturing method, such as 3D printing, is it advantageous to use the disclosed method. Using these manufacturing processes the common placement support and the artificial teeth are manufactured simultaneously, which allows the artificial teeth to be handled subsequently without altering the desired relative arrangement.

According to the invention the digital common placement support is connected to the occlusal surfaces and/or the lingual surfaces of the at least two digital artificial teeth.

In one aspect there is disclosed a denture assembly comprising a denture base and at least two artificial teeth with a common placement support connected to the at least two artificial teeth for keeping the at least two artificial teeth in a desired relative arrangement.

In one embodiment the at least two artificial teeth and the common placement support is formed as one unit. Preferably formed of the same material.

In a further embodiment the common placement support extends from the proximal ends of the at least two artificial teeth, which is placed in the artificial gingiva, and halfway towards the distal end of the artificial tooth, which is facing away from the artificial gingiva.

In yet another embodiment the common placement support is visibly hidden when the at least two artificial teeth are arranged in the artificial gingiva. This can for example be done by forming a common placement support which extends below the edge of a recess, which is provided in the artificial gingiva wherein the artificial teeth is at least partly arranged.

To accommodate the artificial teeth and the common placement support, the artificial gingiva is in one embodiment formed with one single continuous recess for receiving the proximal ends of the at least two artificial teeth and the common placement support.

The current disclosure can be applied to many types of dentures where at least two artificial teeth are needed. This can for example be partial denture, full denture, implant retained denture and/or removable dentures.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1 shows an embodiment of a denture comprising a denture base and artificial teeth with a common placement support as disclosed herein,
Fig. 2 shows a second embodiment of a denture comprising a denture base and artificial teeth with a common placement support as disclosed herein,
Fig. 3 shows a further embodiment of artificial teeth with common placement supports as disclosed herein,
Fig. 4 shows another embodiment of artificial teeth with a common placement support as disclosed herein,
Fig. 5 shows a schematic view of an embodiment of a system for executing the method for digital planning as disclosed herein, and
Fig. 6 shows a further embodiment of artificial teeth with a common placement support as disclosed herein.

### Detailed description

In the following description, reference is made to the accompanying figures, which show by way of illustration how the invention may be practiced.

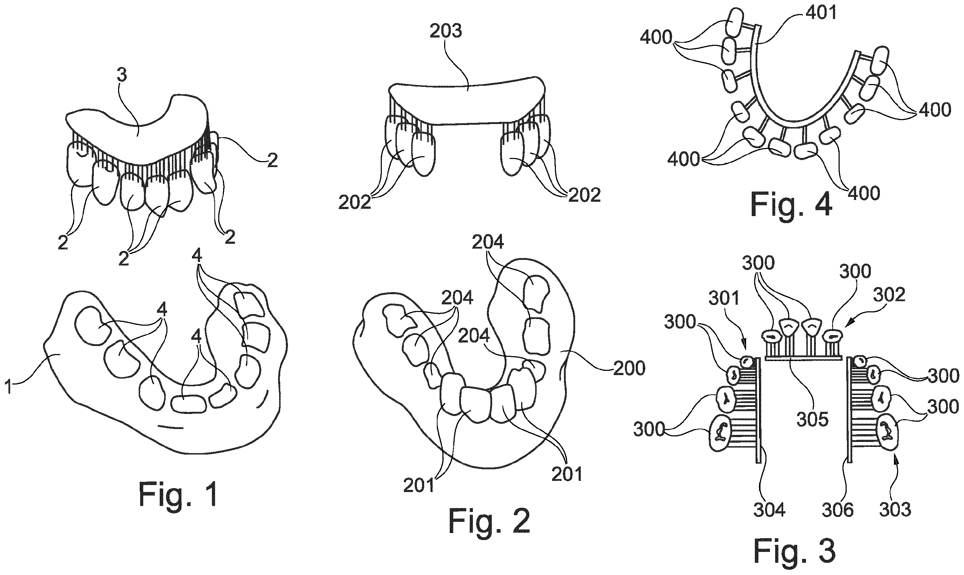

Figure 1 shows the parts of a denture to yet assembled comprising a denture base 1, a set of 3D printed artificial teeth 2 connected to a common placement support 3.

The common placement support 3 is a result of the 3D printing process. Previously the common placement support 3 was removed right after manufacturing of the teeth, but by manufacturing the teeth in the desired relative arrangement the common placement support 3 is kept in order to keep the teeth in their arrangement during handling.

Accordingly, the teeth are placed in the recesses 4 in the denture base 1 and subsequently attached to the denture base 1, e.g. by gluing, with the common placement support connected to the teeth. This ensure optimal positioning of the teeth in the denture base and thereby achieving the desired occlusion of the final denture. When the glue has cured the common placement support can be removed.

In some situations, it is desired to have anterior teeth with improved esthetics, while the posterior teeth can have a simple finish as long as they are functional. Figure 2 shows a denture base 200 wherein four anterior teeth 201 have been placed. The four anterior teeth have been placed separately and have a high esthetic finishing. The posterior teeth 202 have been printed and are all connected in a desired relative arrangement (determined during the digital design of the denture) via a common placement support 203.

The dental technician can easily place and glue the posterior teeth 202 in the respective recesses 204 in denture base 200 knowing that the correct arrangement and thereby occlusion is ensured. When the glue has cured the dental technician removes the common placement support.

Figures 1 and 2 illustrates how the common placement support is attached to the occlusal surfaces of the printed teeth. In alternative embodiments it may be advantageous to attach the common placement support to the lingual surface of the artificial teeth.

In one such embodiment as illustrated in Figure 3 the artificial teeth 300 are separated into three groups 301, 302 and 303. The artificial teeth have been 3D printed and the respective printing sprues and support structures have been kept as common placement supports 304, 305 and 306.

As can be seen, the planning of the 3D printing is done so that the common placement supports are connected to the lingual side of the artificial teeth.

Similarly, in the embodiment in Figure 4, there is provided a set of artificial teeth 400. This set of artificial teeth have been designed with a common placement support 401 connected to the lingual surface of the artificial teeth. In the embodiment in Figure 4 the common placement support was designed in the digital design software (CAD) together with the artificial teeth and manufactured by milling.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

The digital features and steps of the methods described above and in the following may be implemented in software and carried out on a data processing system or other processing means caused by the execution of computer-executable instructions. The instructions may be program code means loaded in a memory, such as a RAM, from a storage medium or from another computer via a computer network. Alternatively, the described features may be implemented by hardwired circuitry instead of software or in combination with software.

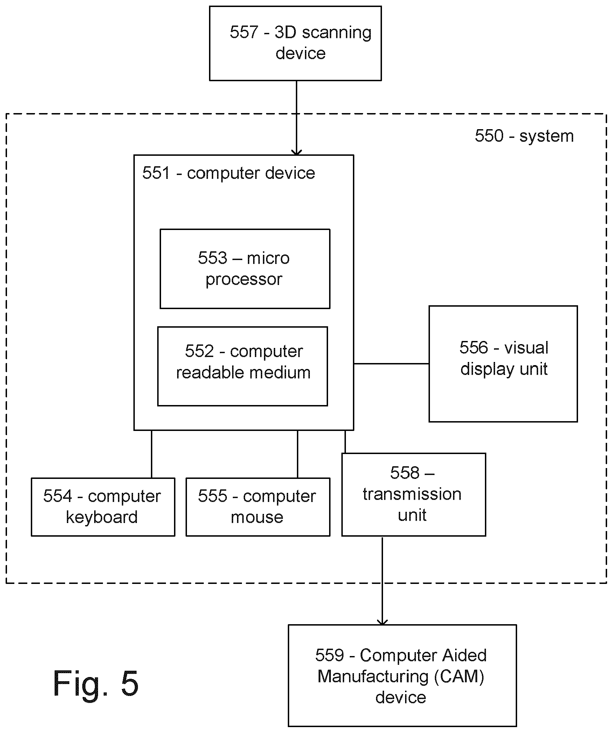

Fig. 5 shows a schematic of a system suitable for digitally planning the manufacturing of the at least two digital artificial teeth as disclosed herein. The system 550 comprises a computer device 551 comprising a computer readable medium 552 and a processor 553. The system further comprises a visual display unit 556, a computer keyboard 554 and a computer mouse 555 for entering data and activating virtual buttons visualized on the visual display unit 556. The visual display unit 556 can be a computer screen. The computer device 551 is capable of receiving a digital 3D representation of the patient's jaw/oral cavity from a scanning device 557, such as the TRIOS intra-oral scanner manufactured by 3shape TRIOS, or capable of receiving scan data from such a scanning device and forming a digital 3D representation of the patient's jaw/oral cavity based on such scan data. The received or formed digital 3D representation can be stored in the computer readable medium 552 and provided to the processor 553. The processor 553 is configured for performing the steps of the method digitally planning method disclosed herein.

The system comprises a unit 558 for transmitting the at least two digital artificial teeth to e.g. a computer aided manufacturing (CAM) device 559, such as a milling machine or a 3D printer as disclosed.

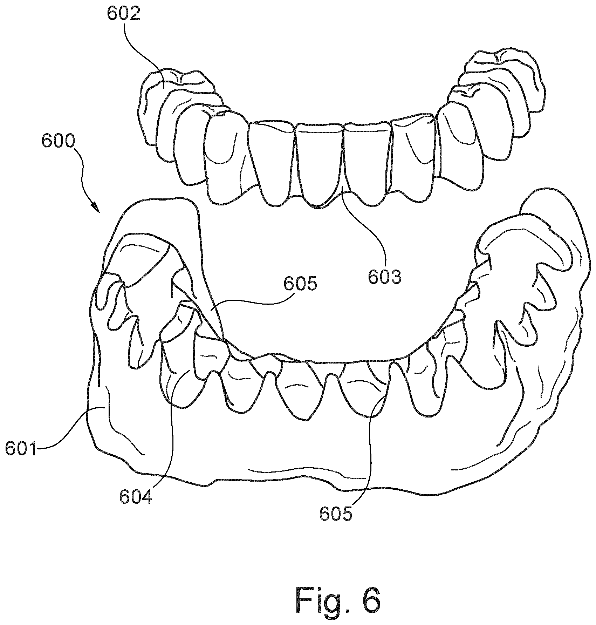

Yet a further embodiment of a denture assembly 600 comprising a denture base 601 and artificial teeth 602 is shown in Fig. 6. The artificial teeth are provided as one unit via a common placement support 603 that connects all the artificial teeth. This ensures the relative position of the artificial teeth and facilitates easy placement of the teeth in the denture base 601.

The common placement support is provided such that it is visibly hidden when the artificial teeth are placed in the denture base 601. This is provided by designing the common placement support so that it is below the gingiva edge of the recess 604 when the artificial teeth are placed in the denture base.

Furthermore, to receive both the artificial teeth and the common placement support a single continuous recess 604 is formed in the artificial gingiva.

## Claims

1. A computer-implemented method for digitally planning the manufacturing of at least two digital artificial teeth (2; 202) provided in a digitally designed denture comprising a digital denture base (1; 200) and the least two digital artificial teeth (2; 202), wherein the method comprises the steps of:
- obtaining the digitally designed denture comprising the digital denture base (1; 200) and the at least two digital artificial teeth (2; 202) arranged in the digital denture base (1; 200) in a desired relative arrangement between the at least two digital artificial teeth (2; 202),
- digitally planning the manufacturing of at least two artificial teeth (2; 202), represented by the at least two digital artificial teeth (2; 202), so that they are attached to a common placement support (3; 203) for maintaining the at least two artificial teeth (2; 202) in the desired relative arrangement, **characterized in that** a digital common placement support (3; 203) representing the common placement support (3; 203) and the at least two digital artificial teeth (2; 202) are digitally designed as one unit and **in that** the digital common placement support (3; 203) is connected to the occlusal or lingual surfaces of the at least two digital artificial teeth (2; 202).

2. The method according to claim 1, wherein the digital common placement support (3; 203) and the at least two digital artificial teeth (2; 202) are prepared to be manufactured by a subtractive manufacturing method, such as milling.

3. The method according to claim 1, wherein the digital common placement support (3; 203) and the at least two digital artificial teeth (2; 202) are prepared to be manufactured by an additive manufacturing method, such as 3D printing.

4. A system (550) for digitally planning the manufacturing of at least two digital artificial teeth (2; 202), the system (550) comprising:
- a computer device (551) comprising a computer readable medium (552) and a processor (553) configured for performing the steps of the method according to any of the claims 1-3.

5. The system according to claim 4, wherein the computer readable medium (552) comprises computer-executable instructions thereon which, when executed by the processor (553), causes the system (550) to carry out the method according to any of the claims 1-3.

6. The system according to claim 5, wherein the system (550) further comprises a visual display unit (556).

7. The system according to claim 6, wherein the system (550) further comprises a computer keyboard (554) and a computer mouse (555) for entering data and activating virtual buttons visualized on the visual display unit.

8. A computer program having computer-executable instructions thereon which, when executed by the system of any of claims 4 to 7, causes the system to carry out the method according to any of the claims 1-3.

## Patentansprüche

1. Computerimplementiertes Verfahren zur digitalen Planung der Herstellung von mindestens zwei digitalen künstlichen Zähnen (2; 202), die in einer digital entworfenen Zahnprothese vorgesehen sind, die eine digitale Zahnprothesenbasis (1; 200) und die mindestens zwei digitalen künstlichen Zähne (2; 202) umfasst, wobei das Verfahren die Schritte umfasst des:
- Erhaltens des digital entworfenen Zahnersatzes, umfassend die digitale Zahnprothesenbasis (1; 200) und die mindestens zwei digitalen künstlichen Zähne (2; 202), die in der digitalen Zahnprothesenbasis (1; 200) in einer gewünschten relativen Anordnung zwischen den mindestens zwei digitalen künstlichen Zähnen (2; 202) angeordnet sind,
- digitalen Planens der Herstellung von mindestens zwei künstlichen Zähnen (2; 202), die durch die mindestens zwei digitalen künstlichen Zähne (2; 202) dargestellt werden, sodass sie an einem gemeinsamen Positionierungsträger (3; 203) befestigt werden, um die mindestens zwei künstlichen Zähne (2; 202) in der gewünschten relativen Anordnung zu halten, **dadurch gekennzeichnet, dass** ein digitaler gemeinsamer Positionierungsträger (3; 203), der den gemeinsamen Positionierungsträger (3; 203) darstellt, und die mindestens zwei digitalen künstlichen Zähne (2; 202) digital als eine Einheit entworfen sind und dass der digitale gemeinsame Positionierungsträger (3; 203) mit den okklusalen oder lingualen Oberflächen der mindestens zwei digitalen künstlichen Zähne (2; 202) verbunden ist.

2. Verfahren nach Anspruch 1, sodass der digitale gemeinsame Positionierungsträger (3; 203) und die mindestens zwei digitalen künstlichen Zähne (2; 202) so vorbereitet werden, dass sie durch ein subtraktives Herstellungsverfahren, wie Fräsen, hergestellt werden können.

3. Verfahren nach Anspruch 1, wobei der digitale gemeinsame Positionierungsträger (3; 203) und die mindestens zwei digitalen künstlichen Zähne (2; 202) so vorbereitet werden, dass sie durch ein additives Herstellungsverfahren, wie beispielsweise 3D-Druck, hergestellt werden können.

4. System (550) zur digitalen Planung der Herstellung von mindestens zwei digitalen künstlichen Zähnen (2; 202), wobei das System (550) umfasst:
- eine Rechenvorrichtung (551), umfassend ein computerlesbares Medium (552) und einen Prozessor (553), konfiguriert zur Durchführung der Schritte des Verfahrens nach einem der Ansprüche 1 bis 3.

5. System nach Anspruch 4, wobei das computerlesbare Medium (552) darauf computerausführbare Anweisungen umfasst, die, wenn sie vom Prozessor (553) ausgeführt werden, das System (550) veranlassen, das Verfahren nach einem der Ansprüche 1 bis 3 auszuführen.

6. System nach Anspruch 5, wobei das System (550) weiter eine visuelle Anzeigeeinheit (556) umfasst.

7. System nach Anspruch 6, wobei das System (550) weiter eine Computertastatur (554) und eine Computermaus (555) zur Eingabe von Daten und zur Aktivierung von virtuellen Tasten umfasst, die auf der visuellen Anzeigeeinheit visualisiert werden.

8. Computerprogramm mit computerausführbaren Anweisungen darauf, das, wenn es von dem System nach einem der Ansprüche 4 bis 7 ausgeführt wird, das System veranlasst, das Verfahren nach einem der Ansprüche 1 bis 3 auszuführen.

## Revendications

1. Procédé mis oeuvre par ordinateur pour planifier de manière numérique la fabrication d'au moins deux dents artificielles numériques (2; 202) fournies dans une prothèse dentaire conçue de manière numérique comprenant une base de prothèse dentaire numérique (1; 200) et au moins deux dents artificielles numériques (2; 202), dans lequel le procédé comprend les étapes consistant à :
- obtenir la prothèse dentaire conçue de manière numérique comprenant la base de prothèse dentaire numérique (1; 200) et les au moins deux dents artificielles numériques (2; 202) agencées dans la base de prothèse dentaire numérique (1; 200) selon un agencement relatif souhaité entre les au moins deux dents artificielles numériques (2; 202),
- planifier de manière numérique la fabrication d'au moins deux dents artificielles (2; 202), représentées par les au moins deux dents artificielles numériques (2; 202), de telle sorte qu'elles soient fixées à un support de placement commun (3; 203) pour maintenir les au moins deux dents artificielles (2; 202) dans l'agencement relatif souhaité, **caractérisé en ce qu'**un support de placement commun numérique (3; 203) représentant le support de placement commun (3 ; 203) et les au moins deux dents artificielles numériques (2; 202) sont conçus de manière numérique sous la forme d'une seule unité et **en ce que** le support de placement commun numérique (3; 203) est reliée aux surfaces occlusales ou linguales des au moins deux dents artificielles numériques (2; 202).

2. Procédé selon la revendication 1, dans lequel le support de placement commun numérique (3; 203) et les au moins deux dents artificielles numériques (2; 202) sont préparés pour être fabriqués par un procédé de fabrication soustractive, tel que le fraisage.

3. Procédé selon la revendication 1, dans lequel le support de placement commun numérique (3; 203) et les au moins deux dents artificielles numériques (2; 202) sont préparés pour être fabriqués par un procédé de fabrication additive, tel que l'impression 3D.

4. Système (550) pour planifier de manière numérique la fabrication d'au moins deux dents artificielles numériques (2 ; 202), le système (550) comprenant :
- un dispositif informatique (551) comprenant un support lisible par ordinateur (552) et un processeur (553) configuré pour exécuter les étapes du procédé selon l'une quelconque des revendications 1-3.

5. Système selon la revendication 4, dans lequel le support lisible par ordinateur (552) comprend des instructions exécutables par ordinateur qui, lorsqu'elles sont exécutées par le processeur (553), amènent le système (550) à exécuter le procédé selon l'une quelconque des revendications 1-3.

6. Système selon la revendication 5, dans lequel le système (550) comprend en outre une unité d'affichage visuel (556).

7. Système selon la revendication 6, dans lequel le système (550) comprend en outre un clavier d'ordinateur (554) et une souris d'ordinateur (555) pour saisir des données et activer des boutons virtuels visualisés sur l'unité d'affichage visuel.

8. Programme informatique présentant des instructions exécutables par ordinateur qui, lorsqu'elles sont exécutées par le système selon l'une quelconque des revendications 4 à 7, amènent le système à exécuter le procédé selon l'une quelconque des revendications 1-3.
